# EUROPEAN PATENT APPLICATION

(11) **EP 4 541 994 A1**
(43) Date of publication of application: **23.04.2025**
(21) Application number: 23842386.7
(22) Date of filing: 20.07.2023
(51) Int. Cl.: E05F 15/689, B60J 5/04, B60J 1/17

(54) **BRACKET STRUCTURE, FRAMELESS VEHICLE DOOR, AND VEHICLE**

(30) Priority: 21.07.2022 CN 202210859255
(71) Applicant: Fuyao Glass Industry Group Co., Ltd., Fuqing, Fujian 350300 (CN)
(72) Inventor: SHI, Menghan, Fuqing, Fujian 350300 (CN); FU, Yanjuan, Fuqing, Fujian 350300 (CN); ZHANG, Jianming, Fuqing, Fujian 350300 (CN); ZHANG, Hui, Fuqing, Fujian 350300 (CN); ZHANG, Fei, Fuqing, Fujian 350300 (CN)
(74) Representative: Patentanwälte Olbricht Buchhold Keulertz
(86) International application number: PCT/CN2023/108354
(87) International publication number: WO 2024/017324

(57) **Abstract**

The present disclosure provides a bracket structure, a frameless vehicle door and a vehicle. The bracket structure is used for supporting and positioning glass (3) of a vehicle window. The bracket structure includes: a support member (1) and an adjustment member (2), the support member (1) is provided with a first support wall (102) and a second support wall (103) which are opposite to each other, a support groove (101) is formed between the first support wall (102) and the second support wall (103), a bottom of the glass (3) is disposed in the support groove (101), the adjustment member (2) is connected to the first support wall (102), and the adjustment member (2) has an amount of deformation towards the glass (3) and pushes and presses the first support wall (102) to apply a pressure to the glass (3), so that a top of the glass (3) can be attached and fitted with a sealing strip on a vehicle body. The present disclosure solves the technical problems of the high difficulty in fit mounting of the glass and the bracket, the long-consumed time and the poor matching effect.

## Description

### RELATED APPLICATION

The present disclosure claims the priority of the Chinese invention patent with an application number of 202210859255.8, an invention title of 'bracket structure, frameless vehicle door, and vehicle' and filed on July 21, 2022.

### TECHNICAL FIELD

The present disclosure relates to the technical field of vehicles, and particularly to a bracket structure, a frameless vehicle door, and a vehicle.

### BACKGROUND

With the consumers' demands for fashion, sportiness and individuality, frameless vehicle doors are more and more used in vehicles (e.g., coupes). The frameless vehicle doors have higher technological requirements for rubber strips, guide rails and even lifting mechanisms, and it is also necessary to automatically control the rise and fall of the glass each time the door is opened or closed.

The design of the frameless vehicle door is different from that of the ordinary vehicle door. The frameless vehicle door can be closely fitted with a vehicle body because the frameless vehicle door is equipped with an opening and closing system. When the vehicle door is opened, the glass will automatically descend slightly, and when the vehicle door is closed, the glass will automatically rise to be fitted and locked with the seal mounted on the vehicle body. Therefore, there is unnecessary to worry about the sealing performance of the frameless vehicle door. However, the glass of frameless vehicle door should ensure the correct opening and closing positions during the lifting of door and window, which is even more critical when there is no frame for guidance.

At present, the glass of the frameless vehicle door is supported by brackets, and almost all brackets are made of metal rigid structures (aluminum alloy materials). After the glass is mounted on the bracket (specifically, when the metal bracket is bonded to the glass, a tape is adhered to a corresponding position of the glass, and then glue is injected from a glue injection port for curing), it is impossible to change the angle and the assembly relationship formed between the bracket and the glass, and then the bracket is clamped or tightened by a connecting structure on a lifter to complete the mounting. Once a vehicle window is fixed on the lifter, it is difficult to correct the position of the vehicle window. Therefore, the disadvantages of the mounting process of the frameless vehicle door and the glass in existing vehicles are mainly as follows:
1. The metal bracket structure has high hardness, and it is necessary to firstly adhere the tape at the bottom to prevent the glass from being directly contacted with the metal bracket, so that the procedures of adhering the tape are increased, the operation steps are complicated and the assembly is difficult.
2. During the gluing process, it is necessary to paste paper tapes (to protect the glass surface) and rubber strips (to stop the glue) around the bracket, then seal the whole area of the rubber strips with a transparent tape, and fix the rubber strips on both sides with the paper tapes to ensure the sealing performance. The whole process takes about 30 minutes, which takes a long time and affects the assembly efficiency.
3. At present, there are two ways for glue curing: the first way is to wait for the natural drying of glue (about 40 to 50 minutes), and before the glue is completely cured, tear off all the paper tapes and rubber strips around the bracket, and then clean the extra glue and adjust the fitness tolerance using a checking fixture, and the complete curing time is about 1 hour. The second way is direct drying with a heating gun, in which it is possible to heat the glue for about 3 to 5 minutes to observe the state thereof, and before the glue is completely cured, tear off all the paper tapes and rubber strips around the bracket, clean the extra glue and adjust the fitness tolerance using a checking fixture, place the glue on an operating station and heat the glue gain for 3 to 5 minutes for curing. In the above two ways, since the hardness of the two-component glue is very high after curing, it is necessary to clean the extra glue in a semi-cured state of the bracket. At that time, it is necessary to remove the bracket from the tooling, and since the bracket is in the semi-cured state, the position between the glass and the bracket will be offset, and positioning has to be made using a checking fixture. To sum up, the natural curing time is long, and the operations of heating and curing are complicated.
4. When being bonded, the glass and the bracket are in loose fit (i.e., a clearance of 1 to 3 mm is reserved between the glass surface and an inner wall of a bracket groove). This assembly way prevents the glass from a pre-tightening force, thereby cannot ensuring a stable motion trajectory of the glass in the lifting process, and also cannot ensuring a good fit effect between the sealing strip and the glass that rises to a highest position.
5. Due to the structural characteristics of the metal bracket and the clearance fit between the bracket groove and the glass, there is no room for adjustment of the glass after mounting and curing, which requires a strict control of the fitness tolerance of the glass (e.g., the fitness tolerance of the glass is ±0.5) to ensure a smooth assembly.

Therefore, the fit mounting of the glass and the bracket is difficult and time-consuming, and achieves a poor matching effect.

### SUMMARY

An objective of the present disclosure is to provide a bracket structure, a frameless vehicle door, and a vehicle, which can finely tune an offset of glass through a bracket, thereby lowering the fitness requirement of the frameless vehicle door on the glass, and improving the yield.

Another objective of the present disclosure is to provide a bracket structure, a frameless vehicle door, and a vehicle, which can save the complicated operations on the tape of the bracket in the process of assembling the glass, improve the mounting efficiency, and reduce the labor consumption.

The present disclosure can be achieved by the following technical solutions:

The present disclosure provides a bracket structure for supporting and positioning glass of a vehicle window, in which the bracket structure includes a support member and an adjustment member, the support member is provided with a first support wall and a second support wall which are opposite to each other, a support groove is formed between the first support wall and the second support wall, a bottom of the glass is disposed in the support groove, the adjustment member is connected to the first support wall, and the adjustment member has an amount of deformation towards the glass and pushes and presses the first support wall to apply a pressure to the glass, so that a top of the glass can be attached and fitted with a sealing strip on a vehicle body.

The present disclosure provides a frameless vehicle door, including glass and the aforementioned bracket structure, a bottom of the glass is disposed on the bracket structure, and the bracket structure can apply a pressure to the glass, so that a top of the glass is fitted and clamped with a sealing strip on a vehicle body.

The present disclosure provides a vehicle, including the aforementioned frameless vehicle door.

The present disclosure has the following advantageous effects:
1. The bracket structure can finely tune the offset of the glass, so that the glass rising to a highest position can be fitted and clamped with the sealing strip on the vehicle body, which ensures that the glass is attached and fitted with the sealing strip, lowers the requirement of the glass on the fitness, improves the yield, and is especially suitable for the frameless vehicle door.
2. In the bracket structure, the support member is made of plastic, so that the complicated operations such as gluing and providing the tape in the process of assembling the glass using the metal bracket can be omitted, the mounting efficiency can be effectively improved, and the labor consumption can be reduced.

### BRIEF DESCRIPTION OF THE DRAWINGS

The following drawings are only for schematic illustration and explanation of the present disclosure, and do not limit the scope of the present disclosure. In which,
FIG. 1 illustrates a first perspective view of a bracket structure according to the present disclosure.
FIG. 2 illustrates a second perspective view of a bracket structure according to the present disclosure.
FIG. 3 illustrates a first assembly view of a bracket structure and glass according to the present disclosure.
FIG. 4 illustrates a second assembly view of a bracket structure and glass according to the present disclosure.
FIG. 5 illustrates a first cross-sectional view of a bracket structure and glass in an assembled state according to the present disclosure.
FIG. 6 illustrates a position view of a first component and a second component in a bracket structure according to the present disclosure.
FIG. 7 illustrates a second cross-sectional view of a bracket structure and glass in an assembled state according to the present disclosure.

### DETAILED DESCRIPTION OF THE EXEMPLARY EMBODIMENTS

In order to have a clearer understanding of the technical features, objectives and effects of the present disclosure, specific embodiments of the present disclosure will now be described with reference to the drawings.

### Embodiment 1

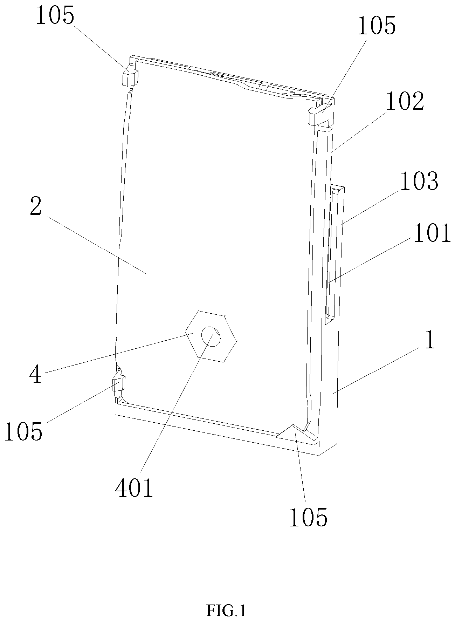

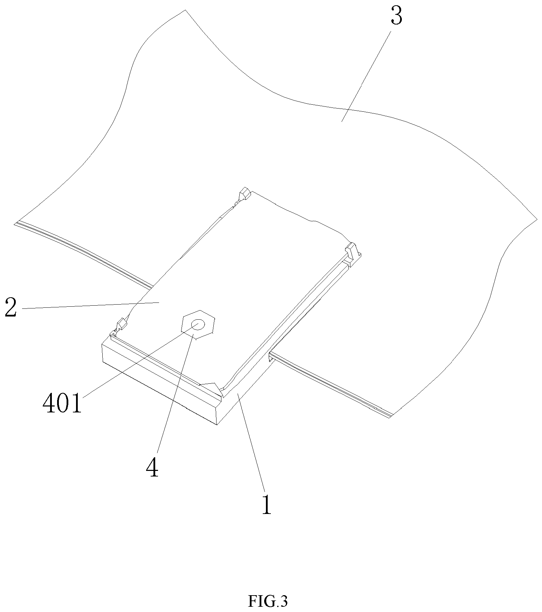

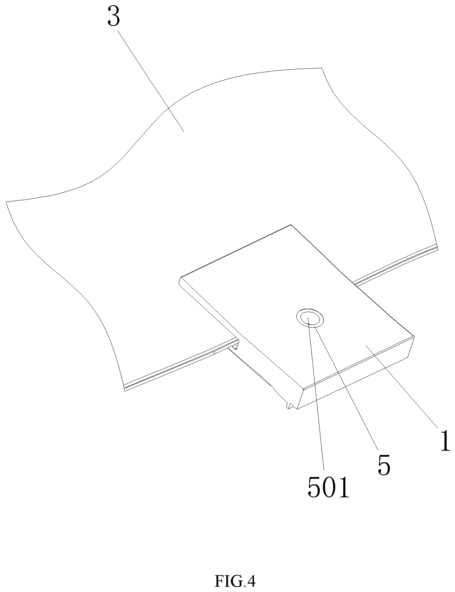

As illustrated in FIGS. 1 to 7, the present disclosure provides a bracket structure for supporting and positioning glass 3 of a vehicle window; the bracket structure includes a support member 1 and an adjustment member 2; the top of the support member 1 is vertically provided with a first support wall 102 and a second support wall 103 which are opposite to each other; a support groove 101 is formed between the first support wall 102 and the second support wall 103; the bottom of the glass 3 is fixedly disposed in the support groove 101; the adjustment member 2 is connected to the first support wall 102; since the adjustment member 2 has an amount of deformation towards the glass 3, the adjustment member 2 can push and press the first support wall 102 to apply a pressure to the glass 3, and then finely tunes an offset of the glass 3, so that the glass 3 rising to a highest position can be attached and fitted with a sealing strip on a vehicle body, which lowers the requirement of the glass 3 itself on the fitness and improves the yield.

Further, the support member 1 is made of plastic to facilitate, while the adjustment member 2 is made of metal to increase the overall strength of the bracket structure. The use of plastic material of support member 1 facilitates the assembly and fixation of glass 3. In which, the plastic used for the support member 1 is specifically PBT-GF30, and the metal used for the adjustment member 2 is specifically DD13 Zn/Ni.

In an optional embodiment of the present disclosure, as illustrated in FIGS. 1 to 7, the adjustment member 2 is provided with a first component 4 that is provided with a threaded hole 401, and the support member 1 is provided with a second component 5 that is provided with a through hole 501 communicated with the threaded hole 401; a bolt of the lifter is screwed into the threaded hole 401, and a distance between the first component 4 and the second component 5 can be adjusted by adjusting the position of the bolt in the threaded hole 401 (i.e., a tightening degree of the bolt), so that the first component 4 drives the adjustment member 2 to produce a displacement, and the adjustment member 2 and the first support wall 102 apply a pressure to the glass 3; the glass 3 can produce an offset under the pressure, so that fine tuning of the glass 3 is achieved.

In this embodiment, as illustrated in FIGS. 1 to 7, the first component 4 is a polygonal barrel-shaped structural member, the adjustment member 2 is provided with a second mounting hole opposite to a first mounting hole, and the first component 4 is embedded in the second mounting hole and clamped and fixed with the second mounting hole. The second component 5 is a cylindrical structural member. The first mounting hole is disposed on the support member 1 and below the support groove 101. The second component 5 is embedded in the first mounting hole, and at least one annular anti-detachment boss 502 is disposed on an outer wall of the second component 5 along a circumference thereof. An inner wall of the first mounting hole is provided with a clamping groove 104 fitted with the anti-detachment boss 502. In an assembled state of the second component 5, the anti-detachment boss 502 is fitted and clamped with the clamping groove 104, so that when the second component 5 is axially stressed, the mounting stability of the second component 5 can be improved and the second component 5 can be prevented from dropping off the first mounting hole, in which the first component 4 can be, but is not limited to, a nut.

Of course, the second component 5 may also be connected to the support member 1 in other connection modes, such as welding or integral injection molding, and the specific connection mode is not limited in the present disclosure.

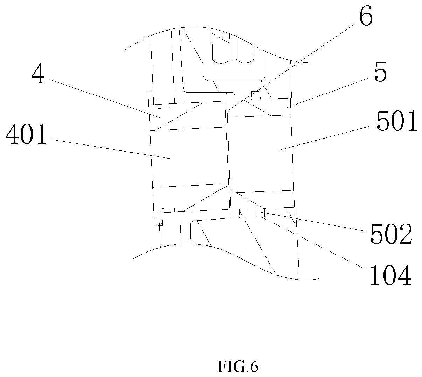

In an optional embodiment of the present disclosure, as illustrated in FIG. 6, the hardness of the first component 4 is greater than that of the second component 5, and a first gap 6 is reserved between the first component 4 and the second component 5 in the assembled state. Since being provided with the threaded hole 401, the first component 4 is tightened into the threaded hole 401 by the bolt on the lifter during final assembly, thereby assembling the lifter and the bracket structure. In the process of screwing the bolt, under the tightening force of the bolt, the first component 4 moves towards the second component 5, even to a position where the first component 4 abuts against the second component 5 (at this time, the first gap 6 is not existed). Since the hardness of the first component 4 is greater than that of the second component 5, the second component 5 is slightly deformed after being pressed by the first component 4. The second component 5 is disposed between the first component 4 and the lifter, so that the first component 4 can be prevented from being directly contacted with the lifter and then damaged under stress, thereby supporting, buffering and protecting the first component 4 (the function of the second component 5 is similar to that of laying a soft washer at the bottom when the screw is tightened), and also preventing the first component 4 from being loosened. In addition, since an end of the second component 5 away from the first component 4 is flush with the surface of the support member 1, the arrangement of the second component 5 can also compensate for the irregularity of the surface of the support member 1.

Further, the first gap 6 exemplarily has a width of 0.15 mm to 0.25 mm.

Further, the material of the first component 4 can be but not limited to stainless steel, and the material of the second component 5 can be but not limited to copper (e.g., brass H59).

Further, a diameter of the through hole 501 is larger than that of the threaded hole 401, and during screwing, an end of the bolt can pass through the through hole 501 and extend into the threaded hole 401 to be screwed and fixed.

In an optional embodiment of the present disclosure, as illustrated in FIGS. 1, 5 and 7, the adjustment member 2 is a plate-shaped structure with a radian, and the shape thereof is adapted to that of the first support wall 102; the adjustment member 2 covers a surface of the first support wall 102 facing away from the glass 3, and a second clearance 7 is formed between a middle portion of the adjustment member 2 and the surface of the first support wall 102 facing away from the glass 3. In addition, the top of the adjustment member 2 abuts against the surface of the first support wall 102 facing away from the glass 3, so that the top of the adjustment member 2 can apply a pressure to the top of the first support wall 102, so that the first support wall 102 can extrude the glass 3 to finely tune the offset of the glass 3.

Specifically, as illustrated in FIG. 1, buckles 105 are respectively disposed at the corners of the first support wall 102 of the support member 1, and the buckles 105 each clamps the edge of the adjustment member 2, so that the adjustment member 2 is connected to the support member 1 through the buckles 105.

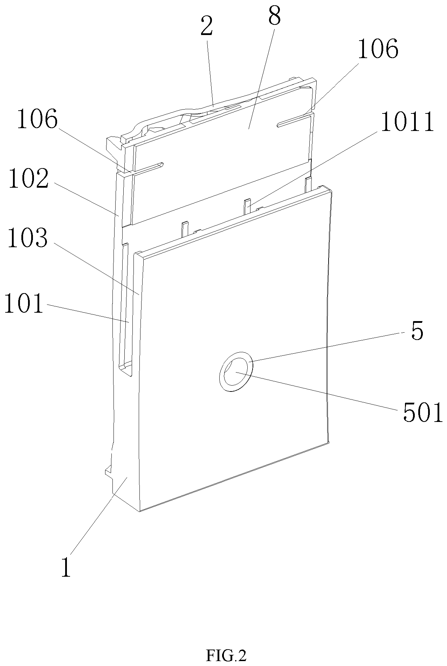

In an optional embodiment of the present disclosure, as illustrated in FIG. 2, rectangular notches 106 are formed on both sides of the top of the support member 1 and close to the buckle 105. In the present disclosure, since the support member 1 is made of plastic and the adjustment member 2 is made of metal, stable assembly can only be realized by extruding the support member 1 to be deformed, and since the support member 1 itself has high hardness, the support member 1 is not easy to be deformed even if it has a certain thickness. Thus, the notches 106 are formed in the support member 1, thereby increasing the deformation capability of the support member 1 at the position close to the buckle 105 and achieving a smooth assembly.

In another optional embodiment of the present disclosure, as illustrated in FIGS. 1, 2, 5 and 7, a vertical length of the first support wall 102 is greater than that of the second support wall 103, and an upper portion of a surface on a side of the first support wall 102 facing the glass 3 is provided with a pressing member 8, which is in interference fit with the glass 3 in the assembled state, so as to apply a pressing force to the glass 3.

Further, the pressing member 8 is a layered structure covering the surface of the first support wall 102. In which, the pressing member 8 is exemplarily made of a thermoplastic elastomer (TPE). The pressing member 8 is added to the support member 1 by secondary injection molding or double injection molding, and the pressing member 8 interferes with an outer surface of the glass 3. However, in the actual assembled state, the interference amount will produce a pressing force on the outer surface of the glass 3, which not only enables the first support wall 102 to be more closely attached to the glass 3, but also applies a pressure on the glass 3 towards the inner side of the vehicle window after the assembly, thereby achieving the effect of fine tuning the offset of the glass 3. In which, the interference amount of the pressing member 8 on the glass 3 is between 0.5 mm and 1.5 mm.

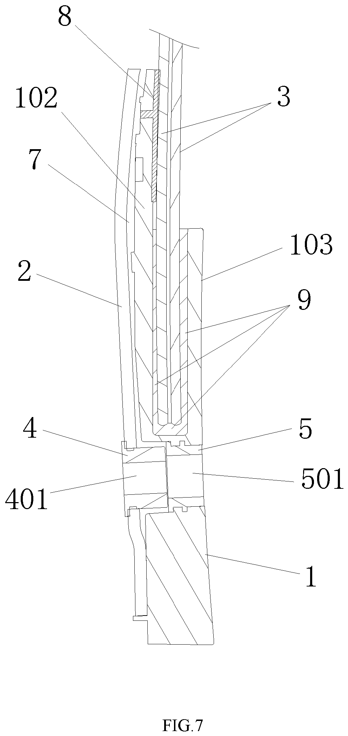

In an optional embodiment of the present disclosure, as illustrated in FIG. 7, a bonding portion 9 is disposed between the two opposite inner walls of the support groove 101 and between the bottom wall of the support groove 101 and the glass 3. The glass 3 is bonded in the support groove 101 through the bonding portion 9, and the assembly of the glass 3 is ensured to be more stable by bonding three surfaces of the glass 3.

In which, the bonding portion 9 is made of adhesive glue, which may adopt ordinary one-component polyurethane glue, two-component polyurethane glue or thermosetting polyurethane glue. Considering the curing time of the adhesive glue and the mounting accuracy of the glass 3, the two-component polyurethane glue and the thermosetting polyurethane glue are exemplary.

Since the vertical length of the first support wall 102 is longer than the vertical length of the second support wall 103 in the present disclosure, the first support wall 102 can increase the contact area between the support member 1 and the glass 3, and reduce the stress borne by the supporting part of the support member 1 during the travelling of the vehicle, while the second support wall 103 is convenient for the injection of the adhesive glue to ensure that the support groove 101 can be fully filled with the adhesive glue. In addition, during the injection of the adhesive glue, it is necessary to ensure that the adhesive glue does not exceed the pressing member 8, so as to avoid the failure of the pressing member 8 due to excessive adhesive glue.

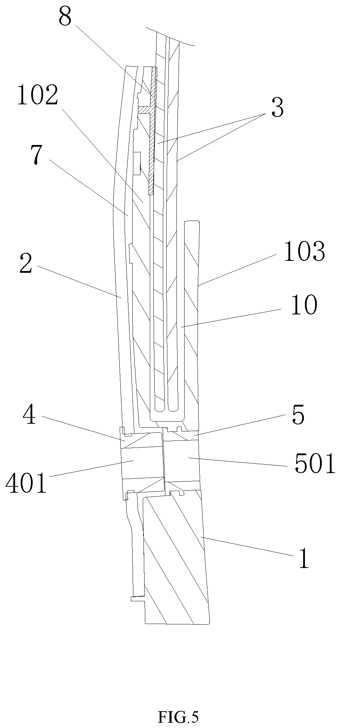

Further, as illustrated in FIG. 5, a fourth gap 10 for disposing the bonding portion 9 is reserved between the two opposite inner walls of the support groove 101 and between the bottom wall of the support groove 101 and the glass 3. Through the arrangement of the fourth gap 10, the bonding portion 9 can be bonded with three surfaces of the glass 3 to form a U-shaped bonding portion 9, which effectively increases the glue storage and ensures the stable bonding of the glass 3.

In an optional embodiment of the present disclosure, as illustrated in FIG. 2, a plurality of reinforcing ribs 1011 extending vertically are disposed on the inner wall of the support groove 101, the reinforcing ribs 1011 are arranged side by side at intervals in a horizontal direction, and a third gap (a part of the fourth gap 10) is reserved between the reinforcing rib 1011 and the glass 3. The arrangement of the reinforcing ribs 1011, on the one hand, prevents the glass 3 and the support member 1 from being displaced after the assembly, and on the other hand, promotes the glue storage and improves the stability of the bonding between the glass 3 and the support member 1.

In which, a width of the third gap can be, but not limited to, 0.2 mm to 1 mm.

During assembly in the present disclosure, after the glass 3 and the support member 1 are mounted and fixed, the adjustment member 2 is mounted externally, and the adjustment member 2 and the support member 1 are assembled and fixed through the buckle 105, with a movement margin maintained between the adjustment member 2 and the support member 1 after the assembly (i.e., the first gap 6 is reserved between the first component 4 and the second component 5); when the assembled glass is loaded, in the process of screwing the bolt on the lifter and the first component 4 on the adjustment member 2, there is interference between the pressing member 8 and the surface of the glass 3 and the adjustment member 2 is attached to the first support wall 102 on the support member 1. Therefore, during the assembly, the pressure applied on the glass 3 by the first support wall 102 can be adjusted by adjusting the tightening degree of the bolt in the threaded hole on the first component 4, so as to adjust the inward offset of the top of the glass 3.

The bracket structure of the present disclosure has the following characteristics and advantages:
1. The bracket structure can finely tune the offset of the glass 3, so that the glass 3 rising to a highest position can be fitted and clamped with the sealing strip on the vehicle body, which ensures that the glass 3 is attached and fitted with the sealing strip, lowers the requirement of the glass 3 on the fitness, improves the yield, and is especially suitable for the frameless vehicle door.
2. In the bracket structure, the support member 1 is made of plastic, so that the complicated operations such as gluing and providing the tape (adhesive tap) in the process of assembling the glass using the metal bracket can be omitted, the mounting efficiency can be effectively improved, and the labor consumption can be reduced.

### Embodiment 2

The present disclosure provides a frameless vehicle door, which includes a glass 3 and the aforementioned bracket structure, in which the bottom of the glass 3 is fixedly disposed on the bracket structure, and the bracket structure can apply a pressure to the glass 3, so that the top of the glass 3 is fitted and clamped with a sealing strip on a vehicle body.

Further, the glass 3 can be made of, but not limited to, tempered glass or semi-tempered laminated glass, in which the semi-toughened laminated glass is exemplary.

### Embodiment 3

The present disclosure provides a vehicle which includes the aforementioned frameless vehicle door.

Those described above are only illustrative embodiments of the present disclosure, and are not intended to limit the scope thereof. Equivalent changes and modifications made by any person skilled in the art without departing from the concept and principle of the present disclosure should fall within the protection scope of the present disclosure.

## Claims

1. A bracket structure for supporting and positioning glass of a vehicle window, wherein the bracket structure comprises a support member and an adjustment member, the support member is provided with a first support wall and a second support wall which are opposite to each other, a support groove is formed between the first support wall and the second support wall, a bottom of the glass is disposed in the support groove, the adjustment member is connected to the first support wall, and the adjustment member has an amount of deformation towards the glass and pushes and presses the first support wall to apply a pressure to the glass, enabling a top of the glass to be attached and fitted with a sealing strip on a vehicle body.

2. The bracket structure according to claim 1, wherein the adjustment member and the support member are provided with a first component and a second component, respectively, the first component is provided with a threaded hole, the second component is provided with a through hole communicated with the threaded hole, and a bolt of a lifter is screwed into the threaded hole to adjust a position of the bolt in the threaded hole, so as to adjust a distance between the first component and the second component.

3. The bracket structure according to claim 2, wherein the second component is a barrel-shaped structural member, a first mounting hole is disposed on the support member and below the support groove, the second component is embedded in the first mounting hole, and an anti-detachment boss and a clamping groove which are fitted and clamped with each other are disposed on an outer wall of the second component and an inner wall of the first mounting hole, respectively.

4. The bracket structure according to claim 3, wherein the first component is a barrel-shaped structural member, the adjustment member is provided with a second mounting hole opposite to the first mounting hole, and the first component is clamped in the second mounting hole.

5. The bracket structure according to any one of claims 2 to 4, wherein in an assembled state, a first gap is reserved between the first component and the second component.

6. The bracket structure according to claim 5, wherein the first gap has a width of 0.15 mm to 0.25 mm.

7. The bracket structure according to claim 2, wherein a diameter of the through hole is larger than that of the threaded hole.

8. The bracket structure according to claim 1, wherein the adjustment member is a plate-shaped structure with a radian, which covers a surface of the first support wall facing away from the glass, a second clearance is formed between a middle portion of the adjustment member and the surface of the first support wall facing away from the glass, and a top of the adjustment member abuts against the surface of the first support wall facing away from the glass.

9. The bracket structure according to claim 8, wherein the adjustment member and the support member are connected by a buckle.

10. The bracket structure according to claim 9, wherein a notch is provided on the support member and close to the buckle.

11. The bracket structure according to claim 1 or 8, wherein a vertical length of the first support wall is longer than that of the second support wall, an upper portion of a surface on a side of the first support wall facing the glass is provided with a pressing member, which is in interference fit with the glass in an assembled state, so as to apply a pressing force to the glass.

12. The bracket structure according to claim 1, wherein a bonding portion is disposed between two opposite inner walls of the support groove and between a bottom wall of the support groove and the glass.

13. The bracket structure according to claim 12, wherein a fourth gap for disposing the bonding portion is reserved between the two opposite inner walls of the support groove and between the bottom wall of the support groove and the glass.

14. The bracket structure according to claim 12, wherein the inner wall of the support groove is provided with reinforcing ribs extending vertically.

15. The bracket structure according to claim 14, wherein a third gap is reserved between the reinforcing rib and the glass, and a width of the third gap is 0.2 mm to 1 mm.

16. The bracket structure according to claim 1, wherein the support member is made of plastic.

17. The bracket structure according to claim 1, wherein the adjustment member is made of metal.

18. A frameless vehicle door, comprising glass and the bracket structure according to any one of claims 1 to 17, a bottom of the glass is disposed on the bracket structure, and the bracket structure can apply a pressure to the glass, so that a top of the glass is fitted and clamped with a sealing strip on a vehicle body.

19. A vehicle, comprising the frameless vehicle door according to claim 18.
